(19) Europäisches Patentamt
European Patent Office
Office européen des brevets

(11) EP 0 748 853 A2

(12) EUROPÄISCHE PATENTANMELDUNG

(43) Veröffentlichungstag: 18.12.1996 Patentblatt 1996/51

(51) Int. Cl.[6]: C09B 69/10, G02F 1/35, C08F 20/34

(21) Anmeldenummer: 96109164.2

(22) Anmeldetag: 07.06.1996

(84) Benannte Vertragsstaaten: CH DE FR GB IT LI

(30) Priorität: 13.06.1995 DE 19521503

(71) Anmelder: BASF AKTIENGESELLSCHAFT
67056 Ludwigshafen (DE)

(72) Erfinder:
- Beckmann, Stefan, Dr.
  67098 Bad Dürkheim (DE)
- Etzbach, Karl-Heinz, Dr.
  67227 Frankenthal (DE)
- Sens, Rüdiger, Dr.
  68165 Mannheim (DE)

(54) **Polymerisierbare Azofarbstoffe mit Thiophenstruktur**

(57) Polymerisierbare Azofarbstoffe I

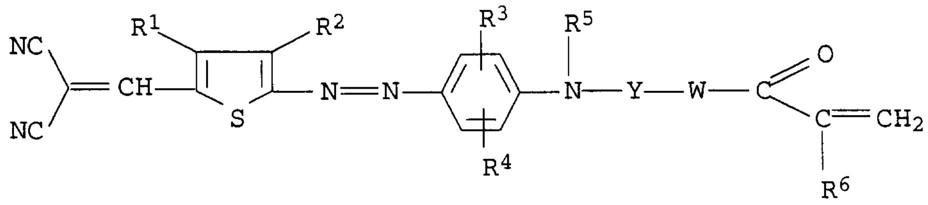

I

in der die Substituenten folgende Bedeutung haben

$R^1$ eine Arylgruppe,

$R^2$ Cyano, $C_1$-$C_4$-Alkoxycarbonyl oder Nitro,

$R^3$,$R^4$ Wasserstoff, $C_1$-$C_{12}$-Alkyl oder $C_1$-$C_6$-Alkoxy,

$R^5$ Wasserstoff, $C_1$-$C_{12}$-Alkyl, $C_5$-$C_7$-Cycloalkyl oder $C_3$-$C_4$-Alkenyl,

$R^6$ Wasserstoff oder Methyl,

Y $C_2$-$C_{10}$-Alkylen, das durch 1 bis 3 nichtbenachbarte Sauerstoffatome oder Imino- oder $C_1$-$C_4$-Alkyliminogruppen unterbrochen sein kann,

W Sauerstoff, Imino oder $C_1$-$C_4$-Alkylimino.

Die Farbstoffe I dienen zur Herstellung von Copolymerisaten, die ihrerseits nichtlinear optische Eigenschaften zeigen.

EP 0 748 853 A2

## Beschreibung

Die vorliegende Erfindung betrifft neue Azofarbstoffe der allgemeinen Formel I

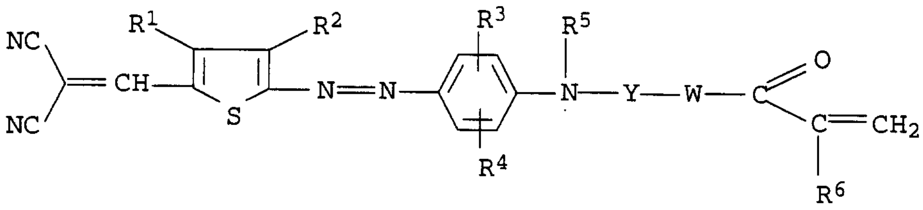

I

in der die Substituenten folgende Bedeutung haben:

| | |
|---|---|
| $R^1$ | eine Arylgruppe, |
| $R^2$ | Cyano, $C_1$-$C_4$-Alkoxycarbonyl oder Nitro, |
| $R^3$,$R^4$ | Wasserstoff, $C_1$-$C_{12}$-Alkyl oder $C_1$-$C_6$-Alkoxy, |
| $R^5$ | Wasserstoff, $C_1$-$C_{12}$-Alkyl, $C_5$-$C_7$-Cycloalkyl oder $C_3$-$C_4$-Alkenyl, |
| $R^6$ | Wasserstoff oder Methyl, |
| Y | $C_2$-$C_{10}$-Alkylen, das durch 1 bis 3 nichtbenachbarte Sauerstoffatome oder Imino- oder $C_1$-$C_4$-Alkyliminogruppen unterbrochen sein kann, |
| W | Sauerstoff, Imino oder $C_1$-$C_4$-Alkylimino. |

Weiterhin betrifft die Erfindung ein Verfahren zur Herstellung dieser Azofarbstoffe, Polymerisate aus diesen Azofarbstoffen und gewünschtenfalls weiteren Monomeren sowie die Verwendung dieser Polymerisate in der nichtlinearen Optik.

Aus J. Polymer Sci., Part A, Polymer Chem., Band 28, Seiten 1 bis 13, 1990 sind Polymerisate bekannt, die in den Seitenketten Azofarbstoffe als Chromophore enthalten. Die Azofarbstoffe stammen aus der Azobenzolreihe. Diese Polymerisate weisen jedoch bei ihrer Anwendung in nichtlinear optischen Systemen Mängel auf.

Außerdem sind aus der EP-A 535 490 Polymerisate bekannt, die in den Seitenketten Azofarbstoffe aus der Azothiophenreihe tragen. Diese Polymerisate sind denen mit Farbstoffen aus der Azobenzolreihe überlegen, jedoch lassen die Farbstoffreste hinsichtlich ihrer Löslichkeit und ihrer Kompatibilität mit den anderen Polymerkomponenten zu wünschen übrig.

Aufgabe der vorliegenden Erfindung war es daher, neue Azofarbstoffe bereitzustellen, die durch eine ausgeprägte Hyperpolarisierbarkeit und gute thermische Stabilität vorteilhaft zur Anwendung in nichtlinear optischen Systemen geeignet sind und die sich durch gute Löslichkeit und gute Kompatibilität mit anderen Polymerkomponenten besonders gut zu nichtlinear-optischen Polymerfilmen verarbeiten lassen.

Demgemäß wurden die eingangs definierten Azofarbstoffe und deren Polymerisate gefunden.

Weiterhin wurden Verfahren zu deren Herstellung und ihre Verwendung in der nichtlinearen Optik gefunden.

Geeignete Reste $R^1$ sind vor allem die Phenylgruppe sowie daneben ein- bis dreifach substituierte Phenylgruppen mit $C_1$-$C_8$-Alkyl- und/oder Alkoxygruppen als Substituenten. Als Alkylgruppen in diesen Resten werden $C_1$-$C_4$-Alkylgruppen bevorzugt, also z.B. Methyl, Ethyl, Propyl, Isopropyl, Butyl, Isobutyl, sec-Butyl und tert-Butyl, besonders Methyl.

Als Reste $R^2$ kommen die Nitrogruppe, $C_1$-$C_4$-Alkoxycarbonylgruppen wie Methoxycarbonyl, Ethoxycarbonyl, Propoxycarbonyl und Butoxycarbonyl sowie besonders bevorzugt die Cyanogruppe in Betracht.

Die Reste $R^3$ und $R^4$ können neben Wasserstoff auch Methyl, Ethyl, Propyl, Isopropyl, Butyl, Isobutyl, sec-Butyl, tert-Butyl, Pentyl, Isopentyl, sec-Pentyl, tert-Pentyl, Neopentyl, Methylpentyl und Hexyl sowie Alkoxygruppen mit diesen Alkylresten bedeuten. Bevorzugt sind Kombinationen, bei denen einer der Reste Wasserstoff bedeutet. Besonders bevorzugt sind Kombinationen, in denen einer der Reste Wasserstoff und der andere Methyl, Ethyl oder t-Butyl bedeutet. Bevorzugte Stellung für diesen Alkylrest ist die o-Position zur Diazogruppe.

Geeignete Reste $R^5$ sind neben Wasserstoff kurze Alkylreste wie für $R^3$ und $R^4$ beschrieben, kurze Alkenylreste

wie Propenyl und die isomeren Butenyle sowie Cycloalkylreste wie Cyclopentyl, Methylcyclopentyl, Cyclohexyl und Methylcyclohexyl. Bevorzugte Reste $R^5$ sind der Ethyl- und der n-Butylrest.

Die Gruppe Y stellt ein Brückenglied zwischen der aromatischen Aminogruppe und der Ester- oder Amidfunktion dar. Geeignete Gruppen Y sind beispielsweise unverzweigtes $\alpha,\omega$-$C_2$-$C_{10}$-Alkylen wie Ethylen, Propylen, Butylen, Pentylen, Hexylen, Heptylen, Octylen, Nonylen und Decylen, wobei die Ethylengruppe, die 1,3-Propylengruppe und die 1,6-Hexylengruppe besonders bevorzugt sind. Ebenfalls geeignet sind Alkylengruppen, die durch 1 bis 3 nicht benachbarte Sauerstoffatome oder Imino- oder $C_1$-$C_4$-Alkyliminogruppen unterbrochen sind.

Für die Gruppe W kommen Imino-, $C_1$-$C_4$-Alkylimino sowie besonders bevorzugt Sauerstoff in Betracht.

Als Rest $R^6$ ist Wasserstoff bevorzugt.

Zur Herstellung der erfindungsgemäßen Verbindungen geht man vorteilhaft von einem 2-Aminothiophen der Formel II, welches analog zu den in der DE 28 18 101 beschriebenen Verfahren hergestellt werden kann, aus

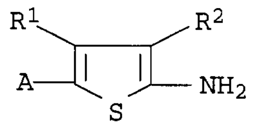

II

in der A eine Gruppe der Formel

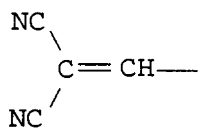

oder

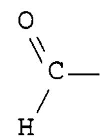

bedeutet.

Zur Herstellung der Verbindungen der Formel II werden beispielsweise, wie in der DDR-Patentschrift 159429 beschrieben, $\alpha$-Cyan-$\beta$-arylcrotonsäurenitrile in Ethanol mit Schwefel und Morpholin zu den entsprechenden 2-Amino-4-arylthiophen-3-carbonitrilen umgesetzt:

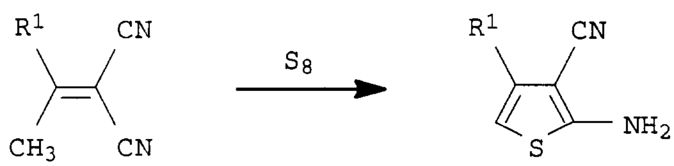


Die Herstellung weiterer Thiophenderivate wurde von K. Gewald in Chem. Ber. <u>99</u>, 94 (1966) beschrieben.

Die Thiophene mit freier 5-Position können unter Vilsmeier-Bedingungen (Dimethylformamid, Phosphoroxitrichlorid oder Phosgen) formyliert werden:

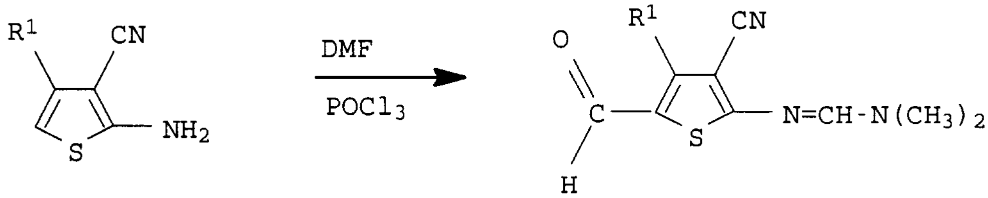


Durch anschließende saure oder alkalische Hydrolyse wird die 2-N,N-Dimethylformamidinogruppe in die 2-Aminogruppe überführt und man erhält die Verbindungen der Formel II mit A=-CHO. Durch Umsetzung mit Malonsäuredinitril erhält man daraus die Verbindungen der Formel II mit A=-CH=C(CN)$_2$.

Die Verbindungen II werden vorzugsweise bei niederer Temperatur, besonders bei 0 bis 5°C, mit Nitrosylschwefelsäure in einem Gemisch aus Eisessig und Propionsäure, diazotiert und danach mit einer Anilinkomponente der Formel III

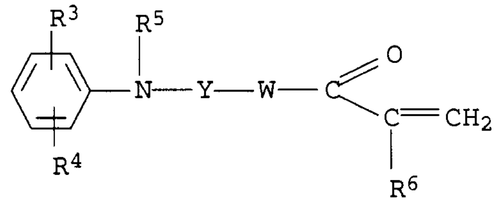

III

gekuppelt, was ebenfalls bevorzugt bei niederer Temperatur geschieht. Die Herstellung der Kupplungskomponente III ist z.B. nach den in der EP-A 535 490 beschriebenen Methoden möglich.

Für den Fall, daß A eine Aldehydfunktion ist, setzt man anschließend mit Malonsäuredinitril um.

Durch die in den erfindungsgemäßen Verbindungen enthaltene Acryl- bzw. Methacrylgruppe können die Farbstoffe polymerisiert oder als Monomerbestandteile in Polymerisate eingebaut werden. Als weitere Monomere für solche Copolymerisate kommen z.B. olefinisch ungesättigte Verbindungen wie vorzugsweise Styrol oder Acrylverbindungen der Strukturen IV und V

$$X\text{-}CO\text{-}C(R^6)\text{=}CH_2 \qquad IV$$

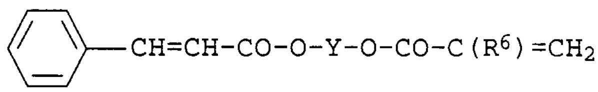

V

in Betracht, wobei $R^6$ und Y die oben angegebene Bedeutung haben und

X Hydroxy, $C_1$-$C_6$-Alkoxy, 2,3-Epoxypropoxy, Phenoxy, Amino oder $C_1$-$C_4$-Mono- oder Dialkylamino bedeutet.

Der Anteil der erfindungsgemäßen Verbindungen in diesen Polymerisaten beträgt zwischen 0,5 und 100 mol-%, bevorzugt 4 bis 50 mol-%, besonders bevorzugt 8 bis 25 mol-%. Der Anteil der Verbindung IV beträgt bevorzugt 51 bis 96 mol-%, besonders bevorzugt 75 bis 92 mol-%, der Styrolanteil beträgt bevorzugt 0 bis 30 mol-%, besonders bevorzugt 0 bis 15 mol-%, der Anteil der Verbindung V beträgt bevorzugt 0 bis 50 mol-%, besonders bevorzugt 0 bis 25 mol-%, jeweils bezogen auf das Polymerisat. Das mittlere Molekulargewicht des Polymerisats beträgt bevorzugt 1500 bis 50000, besonders bevorzugt 2000 bis 25000.

Die erfindungsgemäßen Polymerisate eignen sich in vorteilhafter Weise zur Anwendung in nichtlinear optischen Systemen (siehe z.B. Chemistry and Industry, 1. Oktober 1990, Seiten 600 bis 608). Insbesondere ist hierbei die Eignung der Polymeren in der Nachrichtentechnik, in elektrooptischen Modulatoren (z.B. Mach-Zehnder-Interferometer), in optischen Schaltern, bei der Frequenzmischung oder in Wellenleitern hervorzuheben.

Die Herstellung von Schichten, die die erfindungsgemäßen Polymerisate enthalten, erfolgt dabei in an sich bekannter Weise, z.B. durch Naßbeschichtung (Spincoating) mit einer 5 bis 25-gew.-%igen Lösung des Polymerisats in einem Lösungsmittel (z.B. Tetrachlorethan, Tetrahydrofuran, Diglyme, Chlorbenzol oder Cyclohexanon).

Enthalten die erfindungsgemäßen Verbindungen vernetzungsfähige Substituenten (z.B. Epoxystruktur) so können die neuen Polymerisate auch photochemisch, thermisch oder durch Einwirkung von Elektronenstrahlen vernetzt werden.

Die neuen Polymerisate zeichnen sich durch gute Verarbeitbarkeit zu dünnen Schichten, gute Orientierung im elektrischen Feld, gute Langzeitstabilität, hohe Glasübergangstemperaturen Tg sowie hohe elektrooptische Koeffizienten aus.

Beispiele

Beispiel 1

Herstellung des Azofarbstoffs

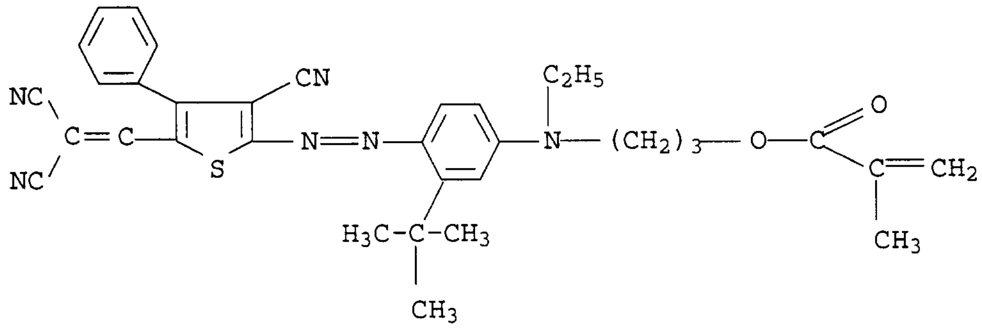

a) Herstellung der Diazokomponente:

Die Herstellung der Diazokomponente 2-Amino-3-cyan-4-phenyl-5-thiophenaldehyd erfolgte analog dem in der DE 28 18 101 beschriebenen Verfahren.

b) Herstellung der Kupplungskomponente:

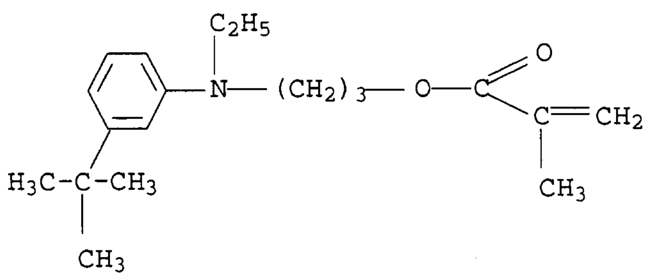

1b

Eine Mischung aus 100 g (0,67 mol) 3-tert-Butylanilin, 72,1 g (0,72 mol) Acrylsäureethylester, 2 ml Eisessig und 0,4 g 2,6-Di-tert-butyl-p-Kresol wurde 4 Stunden bei 120°C gerührt und anschließend bei 0,2 mbar destilliert.

Ausbeute: 102,5 g der Verbindung 1c
Siedepunkt: 120-125°C (0,2 mbar)

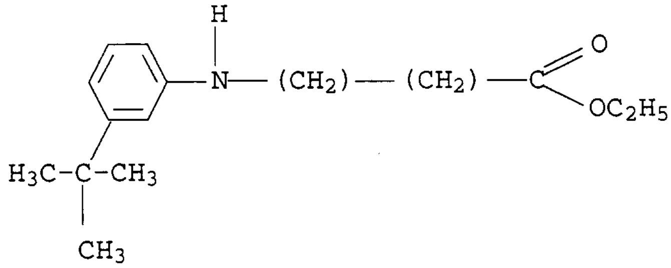

1c

10 g (0,26 mol) Lithiumaluminiumhydrid wurden unter Stickstoff in 120 ml Methyl-tert-butylether suspendiert. Die Mischung wurde zum Rückfluß erhitzt. Dann wurden 64,7 g (0,26 mol) der Verbindung 1c in 120 ml Methyl-tert-butylether zugetropft. Nach 24-stündigem Rühren wurde die Mischung auf Eiswasser gegeben und filtriert. Vom Filtrat wurde die organische Phase abgetrennt, zweimal mit Wasser gewaschen und mit $MgSO_4$ getrocknet. Nach Entfernung des Lösungsmittels wurde das Produkt 1d überdestilliert.

Ausbeute: 28 g der Verbindung 1d
Siedepunkt: 125-128°C (0,3 mbar)

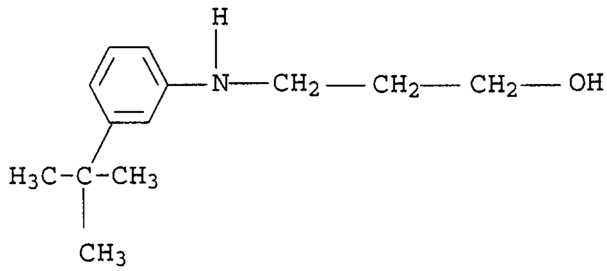

1d

Ein Gemisch aus 23,3 g (0,11 mol) der Verbindung 1d, 34,2 g (0,22 mol) Jodethan, 17,8 g (0,22 mol) Natronlauge, 90 ml Ethanol und 90 ml Wasser wurde 12 Stunden zum Sieden erhitzt. Anschließend wurde wie bei der Herstellung der Verbindung 1d aufgearbeitet.

Ausbeute: 18 g der Verbindung 1e
Siedepunkt: 115-125°C (0,3 mbar)

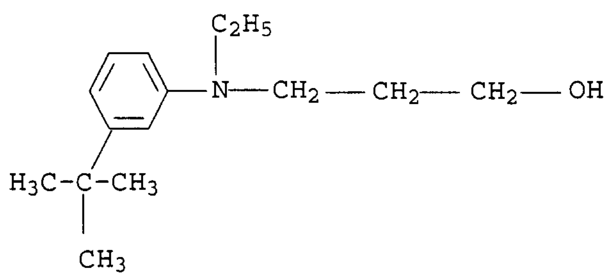

1e

Zu einer Mischung aus 18 g (0,076 mol) der Verbindung 1e in 90 ml Methylenchlorid, 7,2 g (0,091 mol) Pyridin und 0,5 g 2,6-Di-tert-butyl-p-Kresol wurden bei 0°C 10,5 g (0,09 mol) Methacrylsäurechlorid getropft. Das Gemisch wurde 24 Stunden bei Raumtemperatur gerührt und dann wie bei der Herstellung von 1d beschrieben aufgearbeitet. Nach Abdestillieren des Lösungsmittels wurde die Kopplungskomponente 1b als dunkles Öl erhalten, welches ohne weitere Reinigung zum Azofarbstoff umgesetzt wurde.

c) Azokupplung

Eine Lösung aus 14,8 g (65 mmol) des Thiophenderivates

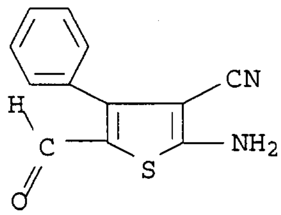

in 115 ml Eisessig/Propionsäure (v/v 7:3) wurde bei 0°C mit 20,5 g (65 mmol) Nitrosylschwefelsäure versetzt. Nach 2 Stunden wurde das Reaktionsgemisch zu einer Lösung von 23,8 g (76 mmol) der Kupplungskomponente

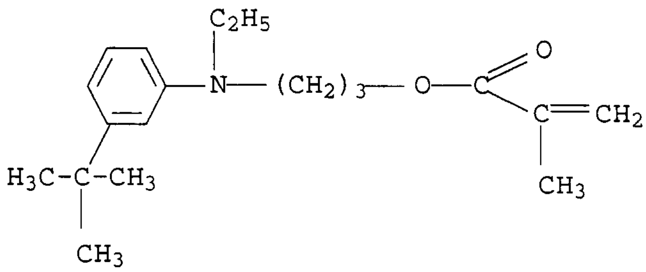

in 100 ml Eisessig gegeben. Nach 30 min wurden 100 g Eis zugegeben, und dann wurde das Reaktionsgemisch noch 15 Stunden bei 20°C gerührt. Das ausgefallene Produkt wurde abfiltriert und mit Wasser gewaschen. Die Reinigung erfolgte durch Säulenchromatographie.

| | |
|---|---|
| Ausbeute: | 6,3 g. |
| $\lambda_{max}$ ($CH_2Cl_2$): | 590 nm |

d) Umsetzung mit Malonsäuredinitril

6,3 g (11,6 mmol) der unter c) erhaltenen Verbindung in 58 ml THF wurden mit 0,85 g (12,8 mol) Malonsäuredinitril, 2,9 ml Eisessig, 1,45 ml Piperidin und 1,45 g Natriumsulfat versetzt. Das Reaktionsgemisch wurde 1 Stunde zum Sieden erhitzt. Zur Aufarbeitung wurde mit Wasser extrahiert. Die organischen Phasen wurden getrocknet und unter vermindertem Druck vom Lösungsmittel befreit. Die Reinigung erfolgte durch Säulenchromatographie.

| | |
|---|---|
| Ausbeute | 3,9 g |
| Schmelzpunkt | 224°C |
| $\lambda_{max}$ ($CH_2Cl_2$): | 666 nm |

Analog zu Beispiel 1 wurden folgende Farbstoffe hergestellt:

Beispiel 2

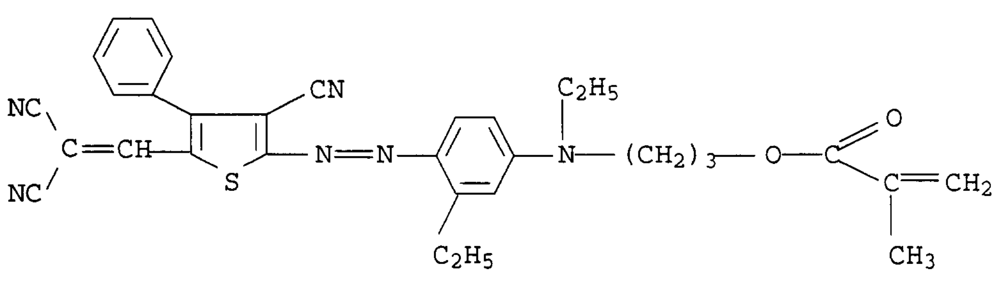

| | |
|---|---|
| Schmelzpunkt | 224°C |
| $\lambda_{max}$ ($CH_2Cl_2$): | 666 nm |

Beispiel 3

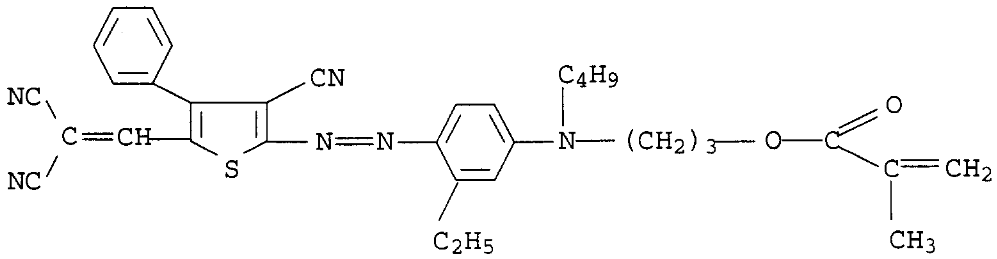

Beispiel 4

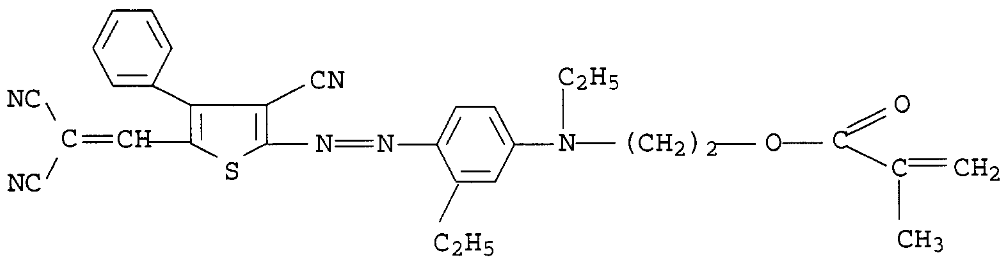

Farbstoffe wie in diesem Beispiel, in denen n = 2 ist, wurden ebenfalls analog hergestellt, jedoch wurde die Kupplungskomponente auf andere Weise erhalten:

Zu einer Mischung aus 121 g (1 mol) 3-Ethylanilin und 101 g (1 mol) Triethylamin wurden 102 g (1 mol) Acetanhydrid getropft. Das Gemisch wurde eine Stunde zum Sieden erhitzt. Die Lösung wurde auf Wasser gegeben, mit Essigester extrahiert, die organische Phase wurde mit Wasser gewaschen, getrocknet und unter vermindertem Druck vom Lösungsmittel befreit.

Ausbeute: 160 g der Verbindung 4a

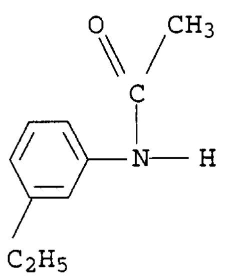

4a

25 g (0,67 mol) Lithiumaluminiumhydrid wurden unter Stickstoff in 100 ml Tetrahydrofuran (THF) suspendiert. Dazu wurden 80 g (0,49 mol) der Verbindung 4a in 350 ml THF bei der Siedetemperatur zugegeben. Anschließend wurde 2 Stunden unter Rückfluß gerührt und dann das Gemisch auf Eiswasser gegeben. Das Gemisch wurde filtriert und weiter wie Verbindung 4a aufgearbeitet.

Ausbeute: 48 g der Verbindung 4b

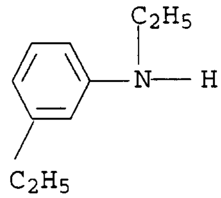

4b

71,5 g (0,48 mol) der Verbindung 4b und 3,3 g (0,024 mol) Zinkchlorid wurden in einem Autoklaven mit Stickstoff gespült und dann unter Druck mit 25 ml Ethylenoxid versetzt. Die Mischung wurde 6 Stunden auf 110°C erhitzt. Die Reinigung erfolgte durch Destillation bei 0,5 mbar.

Ausbeute: 52 g der Verbindung 4b
Siedepunkt: 135-160°C (0,5 mbar)

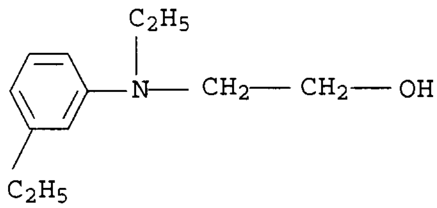

4c

Die weiteren Umsetzungen erfolgten analog zu Beispiel 1.
Analog zu Beispiel 4 wurden die folgenden Farbstoffe hergestellt:

Beispiel 5

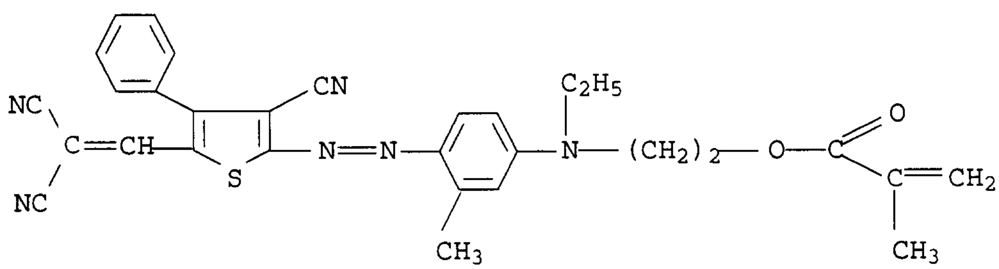

Beispiel 6

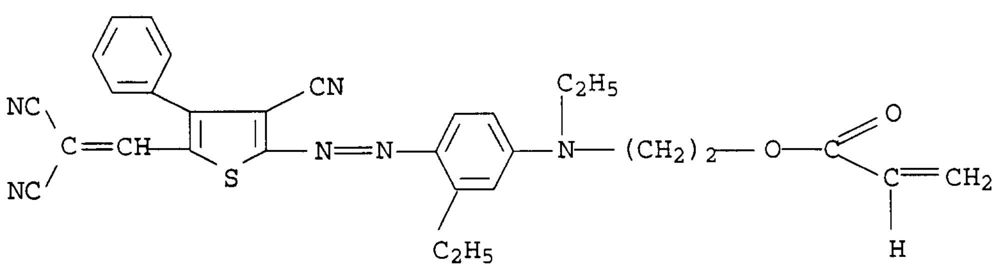

Die Farbstoffe 1 - 6 zeichnen sich durch eine gute Löslichkeit in organischen Lösungsmittel wie Toluol, Chlorbenzol oder THF aus und sind hervorragend verträglich mit Polymeren wie Polymethylmethacrylat, Polystyrol oder Polyethylenterephthalat. Die molekulare Hyperpolarisierbarkeit $\beta$ der Farbstoffe ist überdurchschnittlich hoch. Für den Farbstoff 2 wurde z.B. die solvatochrome Verschiebung $\Delta\bar{\nu}$ in Dioxan ($\lambda_{max}$: 628 nm) und DMSO ($\lambda_{max}$: 672 nm) mit 1043 $cm^{-1}$ bestimmt (Methode siehe Z. Naturforschung, Band 20a, Seiten 1441-1471, 1965). Die für die Hyperpolarisierbarkeit $\chi^2$

relevante Größe μg • βo wurde durch elektrooptische Absorbtionsmessungen bestimmt (Methode siehe Chem. Phys. 173, Seite ggf. und Seite 305 ff, 1993). Für Farbstoff 2 wurde μg • βo = 2500 $C^2 \cdot m^4/V$ erhalten.

**Patentansprüche**

1. Azofarbstoffe der allgemeinen Formel I

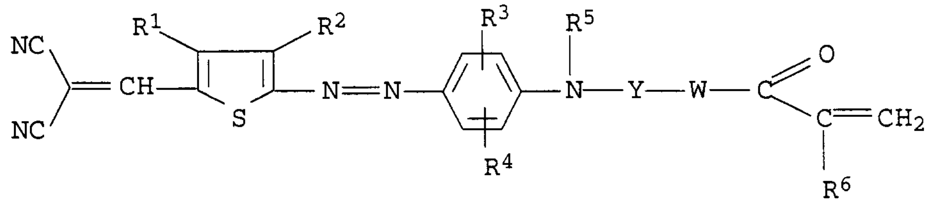

I

in der die Substituenten folgende Bedeutung haben:

| | |
|---|---|
| $R^1$ | eine Arylgruppe, |
| $R^2$ | Cyano, $C_1$-$C_4$-Alkoxycarbonyl oder Nitro, |
| $R^3$,$R^4$ | Wasserstoff, $C_1$-$C_{12}$-Alkyl oder $C_1$-$C_6$-Alkoxy, |
| $R^5$ | Wasserstoff, $C_1$-$C_{12}$-Alkyl, $C_5$-$C_7$-Cycloalkyl oder $C_3$-$C_4$-Alkenyl, |
| $R^6$ | Wasserstoff oder Methyl, |
| Y | $C_2$-$C_{10}$-Alkylen, das durch 1 bis 3 nichtbenachbarte Sauerstoffatome oder Imino- oder $C_1$-$C_4$-Alkyliminogruppen unterbrochen sein kann, |
| W | Sauerstoff, Imino oder $C_1$-$C_4$-Alkylimino. |

2. Azofarbstoffe nach Anspruch 1, in denen $R^1$ Phenyl bedeutet.

3. Azofarbstoffe nach Anspruch 1 oder 2, in denen $R^2$ Cyano bedeutet.

4. Azofarbstoffe nach den Ansprüchen 1 bis 3, in denen $R^3$ Ethyl oder t-Butyl und $R^4$ Wasserstoff bedeutet.

5. Azofarbstoffe nach den Ansprüchen 1 bis 4, in denen $R^5$ Ethyl oder Butyl bedeutet.

6. Azofarbstoffe nach den Ansprüchen 1 bis 5, in denen Y $-(CH_2)_2-$, $-(CH_2)_3-$ oder $-(CH_2)_6-$ bedeutet.

7. Azofarbstoffe nach den Ansprüchen 1 bis 6, in denen W Sauerstoff bedeutet.

8. Azofarbstoffe nach den Ansprüchen 1 bis 7, in denen $R^6$ Wasserstoff bedeutet.

9. Verfahren zur Herstellung der Azofarbstoffe gemäß den Ansprüchen 1 bis 8, dadurch gekennzeichnet, daß man ein Aminothiophen der Formel II

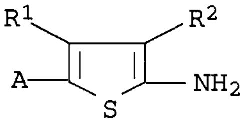

II

in der A eine Gruppe der Formel

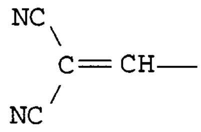 oder 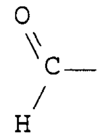

bedeutet, in an sich bekannter Weise diazotiert und danach mit einem Anilinderivat der allgemeinen Formel III

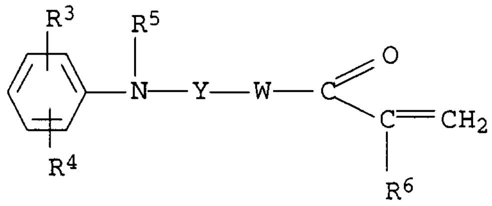 III

umsetzt, und, für den Fall, daß A eine HCO-Gruppe bedeutet, anschließend mit Malonsäuredinitril umsetzt.

**10.** Polymerisate aus 0,5 bis 100 mol-% eines Farbstoffs gemäß den Ansprüchen 1 bis 8 und 0 bis 99,5 mol-% eines radikalisch copolymerisierenden Monomeren.

**11.** Verwendung der Polymerisate gemäß Anspruch 10 für die Zwecke der nichtlinearen Optik.